# FASCICULE DE BREVET EUROPEEN

(11) **EP 4 584 507 B1**
(45) Date de publication et mention de la délivrance du brevet: **03.06.2026**
(21) Numéro de dépôt: 23762477.0
(22) Date de dépôt: 30.08.2023
(51) Int. Cl.: F16B 7/18, F16B 7/04

(54) **INTERFACE MÉCANIQUE DE SUPPORT ET D'ATTACHE POUR STRUCTURE COMPOSITE EN TREILLIS, NOTAMMENT SUR UNE STRUCTURE COMPOSITE FORMANT OSSATURE D'UN DIRIGEABLE RIGIDE**
MECHANISCHE STÜTZ- UND BEFESTIGUNGSSCHNITTSTELLE FÜR EINE VERBUNDGITTERSTRUKTUR, INSBESONDERE AUF EINER VERBUNDSTRUKTUR ZUR FORMUNG EINES RAHMENS EINES STARREN LUFTSCHIFFS
MECHANICAL SUPPORT AND ATTACHMENT INTERFACE FOR A COMPOSITE LATTICE STRUCTURE, IN PARTICULAR ON A COMPOSITE STRUCTURE FORMING A FRAMEWORK OF A RIGID AIRSHIP

(30) Priorité: 06.09.2022 FR 2208890
(43) Date de publication de la demande: 16.07.2025
(73) Titulaire: Flying Whales, 92150 Suresnes (FR)
(72) Inventeur: COHEN, Jessica, 75017 Paris (FR); DESCHAMPS, Alain, 86130 Dissay (FR); DUPRESSOIR, Maxime, 67200 Strasbourg (FR)
(74) Mandataire: IP Trust
(86) Numéro de dépôt international: PCT/EP2023/073759
(87) Numéro de publication internationale: WO 2024/052184

(56) Documents cités:
- WO-A1-2019/079096
- US-A- 1 760 955
- US-A- 6 056 240

## Description

### Domaine technique

Le domaine de l'invention est celui des dispositifs de fixation de systèmes sur des poutres en treillis composite, notamment sur une structure composite formant ossature d'un dirigeable rigide.

De manière non limitative, les systèmes fixés peuvent être des harnais électriques, des cellules à hélium ou encore des filets pour les cellules à hélium, des panneaux externes.

### État de la technique antérieure

L'invention concerne une interface de liaison en matériau composite prévue pour liaisonner au moins deux barres, de façon à former un treillis ou un élément de treillis.

L'expression « treillis » désigne ici un assemblage d'au moins deux membrures reliées entre elles par des nœuds de liaison, aussi désignés par le terme interface de liaison, de façon à former entre les barres une ou plusieurs mailles.

Par ailleurs, l'expression « élément de treillis » désigne une structure élémentaire comprenant deux barres reliées entre elles par un nœud de liaison.

Les poutres en treillis composite sont composées de tubes composites assemblés avec des manchons de jonction.

Il n'est pas recommandé de fixer des systèmes directement sur les tubes composites, car les propriétés des matériaux composites sont optimisées pour les charges de traction et non pour les charges de cisaillement (contrairement aux métaux qui sont isotropes). Les tubes pultrudés au carbone ont la même épaisseur sur toute leur longueur, de sorte que les charges ponctuelles nécessitant une épaisseur locale accrue du tube se traduiront par un tube plus épais et plus lourd sur toute la longueur du faisceau. L'emplacement préféré pour un point de fixation se situe donc au niveau des interfaces de liaison, car la charge supplémentaire due à l'intégration du système ne nécessitera pas de redimensionnement de la poutre.

Le document WO 2019 079096 A1 des systèmes, des appareils et des procédés de construction rapide et rentable d'un dirigeable. Dans un mode de réalisation, une structure de dirigeable peut comporter une pluralité de cadres principaux, chacun comprenant des structures pyramidales interconnectées. L'une des structures pyramidales peut comprendre une articulation supérieure, quatre articulations de base, de premiers raccords et de seconds raccords. L'articulation supérieure et les articulations de base peuvent comporter chacune des fentes conçues pour recevoir des raccords. L'articulation supérieure peut comporter quatre fentes de sommet à base et chaque articulation de base peut comporter une fente de base à sommet et deux fentes de base à base. Chacun des premiers raccords peut raccorder l'articulation supérieure à l'une des quatre articulations de base à l'aide de l'une des fentes de sommet à base de l'articulation supérieure et de la fente de base à sommet de cette articulation de base. Chacun des seconds raccords peut raccorder deux des quatre articulations de base à l'aide de l'une des fentes de base à base de chacune des deux articulations de base raccordées par ce second raccord.

L'invention a pour objet de proposer des interfaces de liaison de structures, telles que des treillis ou des éléments de treillis, qui soient légères et résistantes, qui soient simples, peu coûteuses et répétitives. US 1 760 955 A divulgue une structure en treillis.

### Exposé de l'invention

Un but de l'invention est notamment de remédier à tout ou partie des inconvénients précités. Selon un premier aspect de l'invention, il est proposé une structure en treillis selon la revendication 1, comportant au moins une membrure et au moins deux diagonales, et au moins une interface de liaison prévue pour liaisonner au moins une membrure sous la forme d'un tube cylindrique à au moins deux diagonales, ladite interface de liaison comportant :
- au moins un manchon prévu pour entourer la membrure selon une direction longitudinale, ledit manchon comportant :
- au moins deux douilles en saillie radiale, chacune des douilles étant prévue pour recevoir une extrémité d'une desdites diagonales,
- une première pièce de renfort s'étendant entre les deux douilles, ladite première pièce de renfort présentant un perçage formant point d'attache,
- une deuxième pièce de renfort opposée à la première pièce de renfort par rapport à la direction longitudinale, ladite deuxième pièce de renfort étant en outre pourvue d'un deuxième perçage formant point d'attache,
- une fixation présentant un demi-cylindre s'étendant le long d'une direction, le diamètre intérieur du demi-cylindre étant égal au diamètre extérieur du manchon de l'interface,

ladite fixation comportant en outre deux ailettes s'étendant de part et d'autre des extrémités du demi-cylindre dans un plan transverse à la direction,
chacune desdites ailettes présentant une surface plane coplanaire à une surface plane de l'autre ailette, formant un même plan d'appui commun,
chacune desdites ailettes présentant un perçage, la distance entre les perçages étant égale à la distance entre les perçages de l'interface.

Chacune des pièces de renfort présente une face d'accueil prévue pour recevoir une face d'accessoire.

De préférence, les faces d'accueil des deux pièces de renfort sont coplanaires.

Les perçages servent de point de fixation des interfaces, mais permettent aussi une fermeture mécanique des 2 demi-manchons autour de la membrure, en complément du collage, à l'aide d'éléments de fixation (rivets, vis...) qui servent aussi à fixer l'interface.

Les deux faces d'appui sur le manchon permettent l'intégration d'interface, indépendamment ou simultanément.

Les pièces d'interface permettent de rattraper l'alternance des orientations des manchons le long d'une membrure et d'y intégrer un équipement ayant une position d'interface unique (axe, par exemple).

Selon une configuration préférée, l'interface selon l'invention est formée de deux demi-coquilles prévues pour être assemblées l'une à l'autre, présentant chacune des faces d'appui agencées pour être en appui l'une contre l'autre lorsque les deux demi-coquilles sont assemblées.

De préférence, le deuxième point d'attache est disposé symétriquement au premier point d'attache par rapport à la direction longitudinale.

Avantageusement, les axes de douilles et la direction longitudinale peuvent être coplanaires.

En particulier, les axes des douilles peuvent être concourants avec la direction longitudinale du manchon.

Selon un troisième aspect de l'invention, il est proposé un aéronef, de préférence de type aérostat, de manière encore plus préférée de type dirigeable, comportant une structure selon le deuxième aspect de l'invention, ou l'un ou plusieurs de ses perfectionnements, comportant des sous-systèmes attachés à la structure par l'interface de liaison.

Selon un autre aspect de l'invention, il est proposé un procédé , selon la revendication 7, pour fixer un équipement à une structure composite en treillis selon le premier aspect de l'invention, présentant des membrures, comportant une fixation à la membrure de points d'attache de l'équipement via une interface de liaison.

Selon un mode de réalisation, le procédé est mis en œuvre dans un dirigeable à structure composite.

### Description des figures

D'autres avantages et particularités de l'invention apparaîtront à la lecture de la description détaillée de mises en œuvre et de modes de réalisation nullement limitatifs, au regard de dessins annexés sur lesquels :
[Fig.1] représente schématiquement une vue en perspective d'une partie d'une structure en treillis selon un mode de réalisation de l'invention,
[Fig.2] représente schématiquement une vue en perspective d'une interface d'une structure selon un mode de réalisation de l'invention,
[Fig.3] représente schématiquement une vue éclatée de la vue représentée sur [Fig.2],
[Fig.4] représente schématiquement une vue en plan de l'interface représentée sur [Fig.2],
[Fig.5] représente schématiquement une vue de l'interface représentée sur [Fig.2], selon le plan BB schématisé sur [Fig.4],
[Fig.6] représente schématiquement un premier mode de réalisation d'une fixation coopérant avec l'interface représentée sur [Fig.2], référencée Type A,
[Fig.7] représente schématiquement un deuxième mode de réalisation d'une fixation coopérant avec l'interface représentée sur [Fig.2], référencée Type B,
[Fig.8] représente schématiquement un troisième mode de réalisation d'une fixation coopérant avec l'interface représentée sur [Fig.2], référencée Type C,
[Fig.9] représente schématiquement un quatrième mode de réalisation d'une fixation coopérant avec l'interface représentée sur [Fig.2], référencée Type D,
[Fig.10] représente schématiquement un cinquième mode de réalisation d'une fixation coopérant avec l'interface représentée sur [Fig.2], référencée Type E,
[Fig.11] représente schématiquement une vue en perspective plus complète de la structure en treillis représentée sur [Fig.1].

### Description de mode de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure, à condition que l'étendue de la protection déterminée par les revendications n'est pas dépassée. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures, un élément apparaissant sur plusieurs figures conserve la même référence.

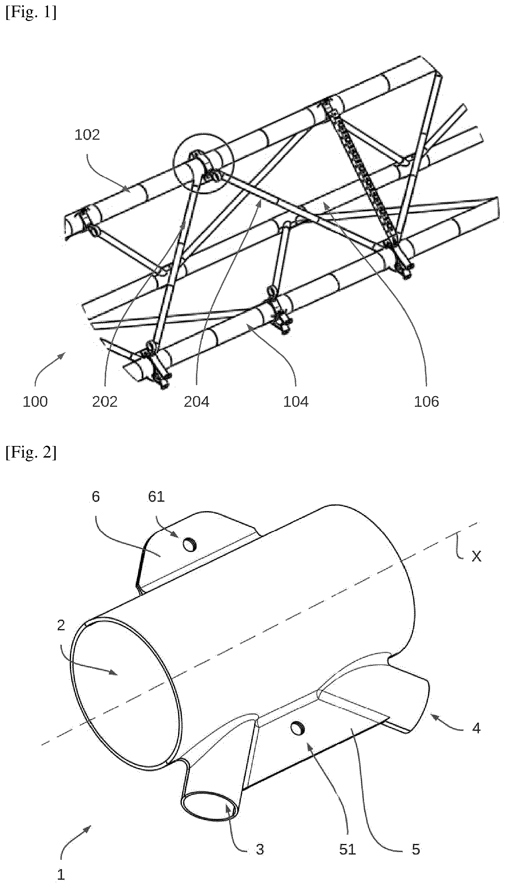

[Fig.1] illustre une vue partielle arrachée d'une structure en treillis 100 comportant trois membrures 102, 104, 106 entre lesquelles sont disposées plusieurs diagonales 202, 204. Dans l'exemple représenté, les membrures ainsi que les diagonales sont des tubes cylindriques.

Les membrures et les diagonales forment une structure légère. Par structure légère, la présente invention vise une structure à base de treillis. Les membrures et les diagonales sont de préférence en matériau composite.

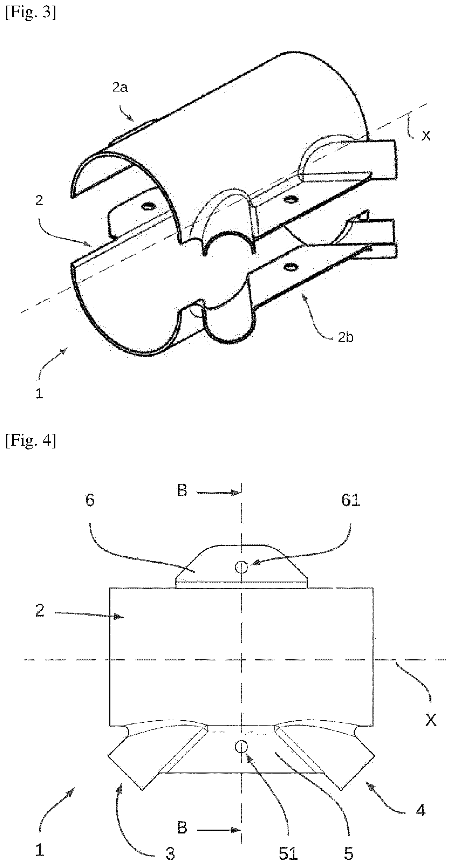

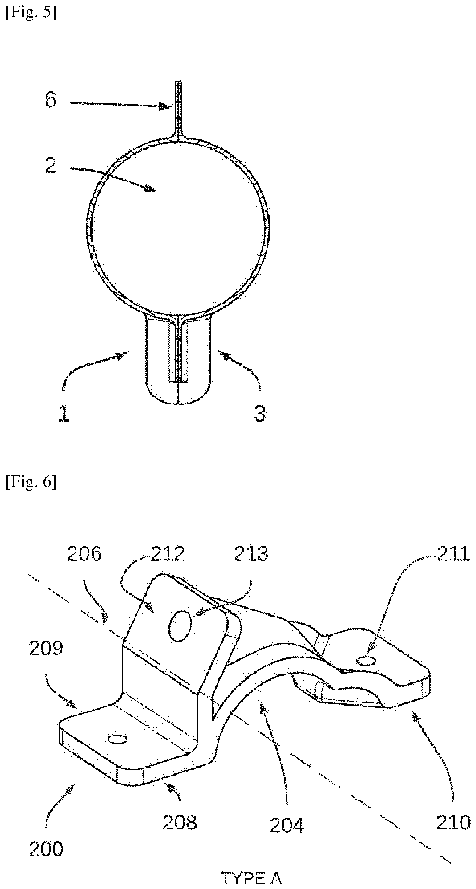

[Fig.2], [Fig.3], [Fig.4] et [Fig.5] illustrent plus en détail une interface de liaison 1 prévue pour liaisonner la membrure 102, et les deux diagonales (aussi appelés éléments d'âme) 204, 206.

L'interface est en matériau composite ou plastique, par exemple de type plastique chargé. Le matériau peut être du PA6 (nylon), du PEEK, ou des bioplastiques. L'interface de liaison peut être en matériau composite ou métallique, par exemple en aluminium.

L'interface de liaison 1 présente un manchon 2 prévu entourer la membrure 102 autour d'une direction longitudinale X de la membrure.

Le manchon 2 est formé de demi-coquilles 2a 2b symétriques par rapport à un plan d'assemblage radial à la direction longitudinale X.

Selon une possibilité qui est représentée, les deux demi-coquilles 2a 2b présentent chacune des faces d'appui destinées à être en contact lorsque les deux demi-coquilles 2a 2b sont assemblées.

Les deux demi-coquilles peuvent par exemple être encollées sur leur face d'appui.

Selon une autre possibilité, le manchon 2 pourrait être formé d'une seule coquille, qui serait enfilée sur la membrure.

Le montage est plus aisé avec deux demi-coquilles.

Le manchon 2 est en outre pourvu de deux douilles 3, 4, en saillie radiale. Chacune des douilles 3, 4 est prévue pour recevoir une extrémité d'une des diagonales 202, 204. Dans l'exemple représenté, chacune des douilles forme un logement à base circulaire adapté à une diagonale à base circulaire.

Dans l'exemple représenté, les axes de douilles 3, 4 et la direction longitudinale sont coplanaires. En outre, dans l'exemple représenté, les axes des douilles 3, 4 sont concourants avec la direction longitudinale du manchon 2.

Le manchon 2 est en outre prévu avec une pièce de renfort 5 qui s'étend entre les deux douilles. Dans l'exemple représenté, la pièce de renfort présente sensiblement une forme de plaque, s'étendant radialement par rapport à la direction longitudinale X.

La première pièce de renfort 5 présente un perçage 51 formant point d'attache. Dans l'exemple représenté, le perçage 51 est sensiblement orthogonal à l'épaisseur de la pièce de renfort.

Le manchon 2 est en outre prévu avec une deuxième pièce de renfort 6. Dans l'exemple représenté, la pièce de renfort 6 présente sensiblement une forme de plaque, s'étendant radialement par rapport à la direction longitudinale X, du côté opposé à la première pièce de renfort 5 par rapport à la direction longitudinale X.

La deuxième pièce de renfort 6 est en outre pourvue d'un deuxième perçage 61 formant point d'attache.

Comme cela est plus visible sur les figures, les deux perçages 51 et 61 sont disposés symétriquement par rapport à la direction longitudinale X.

Les éléments d'interfaces (surface et perçages) sont standardisés (entraxe fixe) pour toute la plage de valeurs prise par le diamètre de membrure. Ainsi il est possible d'intégrer tout type d'équipement respectant ce standard à chaque nœud de treillis.

Les définitions des pièces d'interface permettent leur intégration dans le cas critique où le diamètre de membrure est maximal.

Les deux pièces de renforts sont de préférence identiques en épaisseur et coplanaires afin de permettre l'installation des éléments de fixation selon une orientation souhaitée.

### TYPE A

Il est maintenant décrit en référence à [Fig.6] un premier mode de réalisation d'une fixation 200 de Type A agencée pour coopérer avec l'interface représentée sur [Fig.2].

La fixation 200 présente un demi-cylindre 204, de préférence à base annulaire, s'étendant le long d'une direction 206. Le diamètre intérieur du demi-cylindre 204 est choisi au moins égal au diamètre extérieur du manchon correspondant au diamètre de membrure le plus grand. Ceci afin de pouvoir utiliser une fixation sur des manchons de diamètre légèrement différents et limiter le nombre de références en les associant à une plage de diamètre.

La fixation 200 comporte en outre deux ailettes 208, 210 s'étendant de part et d'autre des extrémités du demi-cylindre 204 dans un plan transverse à la direction 206. Un congé est formé entre le demi-cylindre 204 et chacune des ailettes 208, 210.

Chacune des ailettes 208, 210 présente une surface plane coplanaire à une surface plane de l'autre ailette, formant un même plan d'appui commun. Ainsi, la surface plane commune peut être plaquée contre le plan défini par les pièces de renfort 5 et 6 de l'interface 1.

Chacune des ailettes 208, 210 présente un perçage 209, 211. La distance entre les perçages 209 et 211 est égale à celle entre les perçages 51 et 61 de l'interface 1. Ainsi, il est possible de verrouiller, par exemple au moyen d'un système vis écrou, la fixation 200 sur l'interface 1.

La fixation 200 comporte en outre un doigt 212 s'étendant depuis l'intersection du demi-cylindre 204 et de l'ailette 208, du côté du demi-cylindre 204. Le doigt 212 présente un perçage taraudé 213 prévu pour y fixer un insert fileté.

### TYPE B

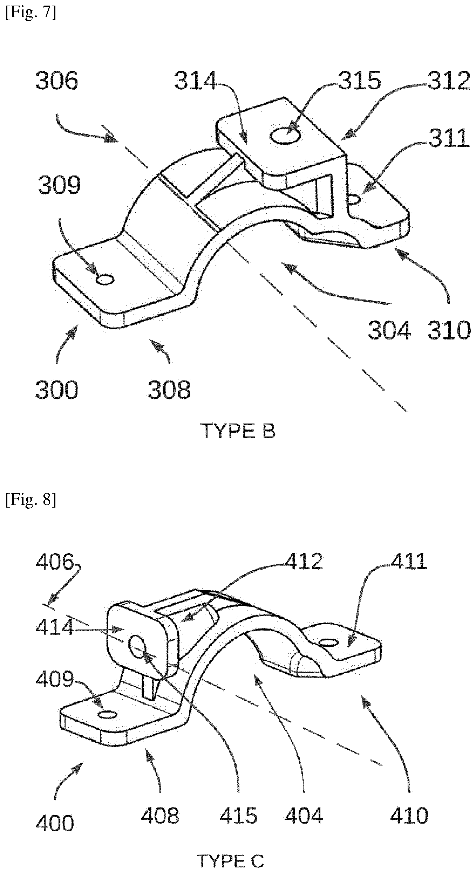

Il est maintenant décrit en référence à [Fig.7] un deuxième mode de réalisation d'une fixation 300 de Type B agencée pour coopérer avec l'interface représentée sur [Fig.2].

La fixation 300 présente un demi-cylindre 304, de préférence à base annulaire, s'étendant le long d'une direction 306. Le diamètre intérieur du demi-cylindre 304 est choisi au moins égal au diamètre extérieur du manchon correspondant au diamètre de membrure le plus grand. Ceci afin de pouvoir utiliser une fixation sur des manchons de diamètre légèrement différents et limiter le nombre de références en les associant à une plage de diamètre.

La fixation 300 comporte en outre deux ailettes 308, 310 s'étendant de part et d'autre des extrémités du demi-cylindre 304 dans un plan transverse à la direction 306. Un congé est formé entre le demi-cylindre 304 et chacune des ailettes 308, 310.

Chacune des ailettes 308, 310 présente une surface plane coplanaire à une surface plane de l'autre ailette, formant un même plan d'appui commun. Ainsi, la surface plane commune peut être plaquée contre le plan défini par les pièces de renfort 5 et 6 de l'interface 1.

Chacune des ailettes 308, 310 présente un perçage 309, 311. La distance entre les perçages 309 et 311 est égale à celle entre les perçages 51 et 61 de l'interface 1. Ainsi, il est possible de verrouiller, par exemple au moyen d'un système vis écrou, la fixation 300 sur l'interface 1.

La fixation 300 comporte en outre un doigt 312 s'étendant depuis l'intersection du demi-cylindre 304 et de l'ailette 308, du côté du demi-cylindre 204. Le doigt 312 présente une surface 314 parallèle au plan défini par les surfaces des ailettes 308, 310. La surface 314 est pourvue d'un perçage 315 prévu pour y fixer un accessoire.

### TYPE C

Il est maintenant décrit en référence à [Fig.8] un troisième mode de réalisation d'une fixation 400 de Type C agencée pour coopérer avec l'interface représentée sur [Fig.2].

La fixation 400 présente un demi-cylindre 404, de préférence à base annulaire, s'étendant le long d'une direction 406. Le diamètre intérieur du demi-cylindre 404 est choisi égal au moins égal au diamètre extérieur du manchon correspondant au diamètre de membrure le plus grand. Ceci afin de pouvoir utiliser une fixation sur des manchons de diamètre légèrement différents et limiter le nombre de références en les associant à une plage de diamètre.

La fixation 300 comporte en outre deux ailettes 408, 410 s'étendant de part et d'autre des extrémités du demi-cylindre 404 dans un plan transverse à la direction 406. Un congé est formé entre le demi-cylindre 404 et chacune des ailettes 408, 410.

Chacune des ailettes 408, 410 présente une surface plane coplanaire à une surface plane de l'autre ailette, formant un même plan d'appui commun. Ainsi, la surface plane commune peut être plaquée contre le plan défini par les pièces de renfort 5 et 6 de l'interface 1.

Chacune des ailettes 408, 310 présente un perçage 409, 411. La distance entre les perçages 409 et 411 est égale à celle entre les perçages 51 et 61 de l'interface 1. Ainsi, il est possible de verrouiller, par exemple au moyen d'un système vis écrou, la fixation 400 sur l'interface 1.

La fixation 400 comporte en outre un doigt 412 s'étendant depuis la partie du demi-cylindre 404 la plus éloignée des ailettes 408, 410. Le doigt 412 présente une surface 414 perpendiculaire au plan défini par les surfaces des ailettes 408, 410. La surface 414 est pourvue d'un perçage 415 prévu pour y fixer un accessoire.

### TYPE D

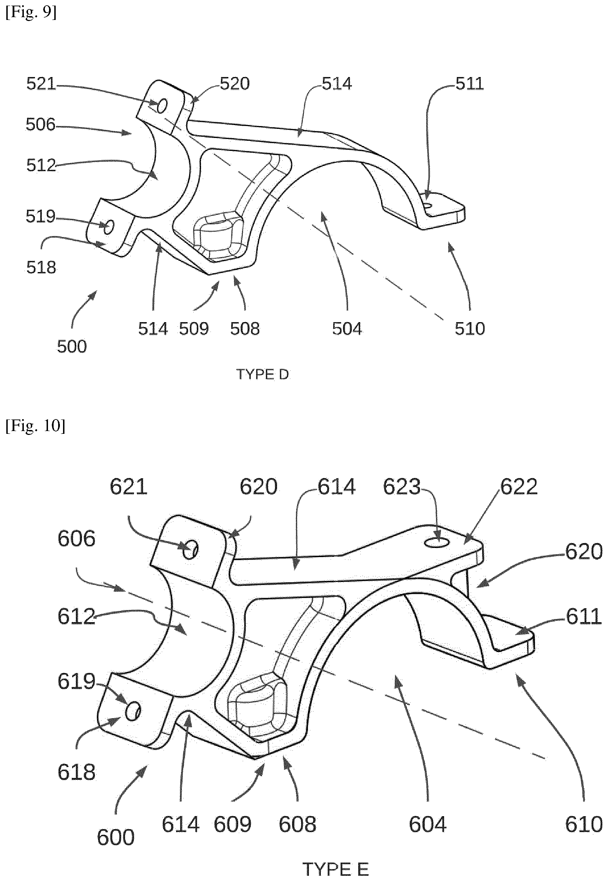

Il est maintenant décrit en référence à [Fig.9] un quatrième mode de réalisation d'une fixation 500 de Type D agencée pour coopérer avec l'interface représentée sur [Fig.2].

La fixation 400 présente un demi-cylindre 504, de préférence à base annulaire, s'étendant le long d'une direction 506. Le diamètre intérieur du demi-cylindre 504 est choisi au moins égal au diamètre extérieur du manchon correspondant au diamètre de membrure le plus grand. Ceci afin de pouvoir utiliser une fixation sur des manchons de diamètre légèrement différents et limiter le nombre de références en les associant à une plage de diamètre.

La fixation 500 comporte en outre deux ailettes 508, 510 s'étendant de part et d'autre des extrémités du demi-cylindre 504 dans un plan transverse à la direction 506. Un congé est formé entre le demi-cylindre 504 et chacune des ailettes 508, 510.

Chacune des ailettes 508, 510 présente une surface plane coplanaire à une surface plane de l'autre ailette, formant un même plan d'appui commun. Ainsi, la surface plane commune peut être plaquée contre le plan défini par les pièces de renfort 5 et 6 de l'interface 1.

Chacune des ailettes 508, 510 présente un perçage 509, 511. La distance entre les perçages 409 et 411 est égale à celle entre les perçages 51 et 61 de l'interface 1. Ainsi, il est possible de verrouiller, par exemple au moyen d'un système vis écrou, la fixation 500 sur l'interface 1.

La fixation 500 comporte en outre un demi-cylindre 512 s'étendant selon un axe parallèle à l'axe 506. Le demi-cylindre 512 est rapporté sur la fixation 500 par deux jambes 514, 516. La jambe 514 rapporte les efforts exercés sur le demi-cylindre 512 au niveau de l'extrémité de l'ailette 508 opposée au demi-cylindre 504. La jambe 516 rapporte les efforts exercés sur le demi-cylindre 512 au niveau la partie du demi-cylindre 504 la plus éloignée des ailettes 508.

La fixation 500 comporte en outre deux ailettes 518, 520 s'étendant de part et d'autre des extrémités du demi-cylindre 512 dans un plan transverse à la direction 506. Un congé est formé entre le demi-cylindre 512 et chacune des ailettes 518, 520.

Chacune des ailettes 518, 520 présente une surface plane coplanaire à une surface plane de l'autre ailette, formant un même plan d'appui commun. Ainsi, la surface plane commune définit un appui plan apte à recevoir un accessoire.

Chacune des ailettes 518, 520 présente un perçage 519, 521. Ainsi, il est possible de verrouiller, par exemple au moyen d'un système vis écrou, un accessoire.

### TYPE E

Il est maintenant décrit en référence à [Fig.10] un cinquième mode de réalisation d'une fixation 600 de Type E agencée pour coopérer avec l'interface représentée sur [Fig.2].

La fixation 600 présente un demi-cylindre 604, de préférence à base annulaire, s'étendant le long d'une direction 606. Le diamètre intérieur du demi-cylindre 604 est choisi au moins égal au diamètre extérieur du manchon correspondant au diamètre de membrure le plus grand. Ceci afin de pouvoir utiliser une fixation sur des manchons de diamètre légèrement différents et limiter le nombre de références en les associant à une plage de diamètre.

La fixation 600 comporte en outre deux ailettes 608, 610 s'étendant de part et d'autre des extrémités du demi-cylindre 604 dans un plan transverse à la direction 606. Un congé est formé entre le demi-cylindre 604 et chacune des ailettes 608, 610.

Chacune des ailettes 608, 610 présente une surface plane coplanaire à une surface plane de l'autre ailette, formant un même plan d'appui commun. Ainsi, la surface plane commune peut être plaquée contre le plan défini par les pièces de renfort 5 et 6 de l'interface 1.

Chacune des ailettes 608, 610 présente un perçage 609, 611. La distance entre les perçages 609 et 611 est égale à celle entre les perçages 51 et 61 de l'interface 1. Ainsi, il est possible de verrouiller, par exemple au moyen d'un système vis écrou, la fixation 600 sur l'interface 1.

La fixation 600 comporte en outre un demi-cylindre 612 s'étendant selon un axe parallèle à l'axe 606. Le demi-cylindre 612 est rapporté sur la fixation 600 par deux jambes 614, 616. La jambe 614 rapporte les efforts exercés sur le demi-cylindre 612 au niveau de l'extrémité de l'ailette 608 opposée au demi-cylindre 604. La jambe 616 rapporte les efforts exercés sur le demi-cylindre 612 au niveau la partie du demi-cylindre 604 la plus éloignée des ailettes 608.

La fixation 600 comporte en outre deux ailettes 618, 620 s'étendant de part et d'autre des extrémités du demi-cylindre 612 dans un plan transverse à la direction 606. Un congé est formé entre le demi-cylindre 612 et chacune des ailettes 618, 620.

Chacune des ailettes 618, 620 présente une surface plane coplanaire à une surface plane de l'autre ailette, formant un même plan d'appui commun. Ainsi, la surface plane commune défini un appui plan apte à recevoir un accessoire.

Chacune des ailettes 618, 620 présente un perçage 619, 621. Ainsi, il est possible de verrouiller, par exemple au moyen d'un système vis écrou, un accessoire.

La fixation 600 comporte en outre un doigt 620 s'étendant depuis l'intersection du demi-cylindre 604 et de l'ailette 610, du côté du demi-cylindre 604. Le doigt 620 présente une surface 622 parallèle au plan défini par les surfaces des ailettes 608, 610. La surface 622 est pourvue d'un perçage 623 prévu pour y fixer un accessoire.

### Figure 11

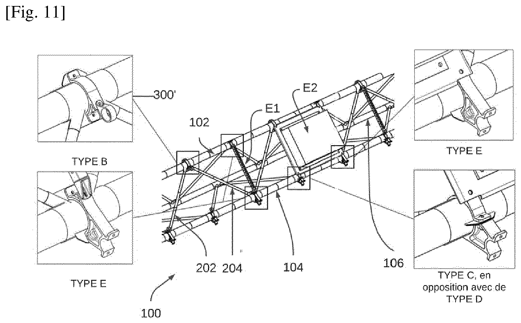

En référence à [Fig.11], il est maintenant décrit une structure en treillis 500 comportant une pluralité de fixation selon l'invention.

Plus précisément, il est illustré en partie haute et gauche le détail d'une interface de type B, en partie basse et gauche le détail d'une interface de type E, en partie haute et droite le détail d'une interface de type E, utilisé pour supporter une plaque d'équipement, en partie basse et droite le détail d'une interface de type C, installée en opposition avec une pièce de type D.

Comme l'illustre la [Fig.11], il est ainsi possible de monter une rampe E1 pour recevoir des câbles au moyen de deux interfaces de type B selon l'invention.

Il est en outre possible de monter un panneau E2 pour recevoir d'autres équipements (pompe, collecteur de données) (au moyen de quatre interfaces selon l'invention, dont une de type C) et une de type E.

La structure permet ainsi de fixer des sous-systèmes dans un dirigeable présentant une structure conforme à l'invention.

Bien sûr, l'invention n'est pas limitée aux exemples qui viennent d'être décrits et de nombreux aménagements peuvent être apportés à ces exemples sans sortir du cadre de l'invention telle que déterminée par les revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres, à condition que l'étendue de la protection déterminée par les revendications n'est pas dépassée.

## Revendications

1. Structure en treillis, comportant au moins une membrure et au moins deux diagonales, et au moins une interface de liaison (1) prévue pour liaisonner au moins une membrure (102) sous la forme d'un tube cylindrique à au moins deux diagonales (202, 204), ladite interface de liaison (1) comportant :
- au moins un manchon (2) prévu pour entourer la membrure selon une direction longitudinale (X), ledit manchon comportant :
- au moins deux douilles (3, 4) en saillie radiale, chacune des douilles étant prévue pour recevoir une extrémité d'une desdites diagonales,
- une première pièce de renfort (5) s'étendant entre les deux douilles, ladite première pièce de renfort présentant un perçage (51) formant point d'attache,
- une deuxième pièce de renfort (6) opposée à la première pièce de renfort par rapport à la direction longitudinale, ladite deuxième pièce de renfort étant en outre pourvue d'un deuxième perçage (61) formant point d'attache,
- une fixation (200, 300, 400, 500, 600) présentant un demi-cylindre (204, 304, 404, 504, 604) s'étendant le long d'une direction (206, 306, 406, 506, 606), le diamètre intérieur du demi-cylindre étant égal au diamètre extérieur du manchon (2) de l'interface (1),
ladite fixation comportant en outre deux ailettes (208, 308 ; 308, 310 ; 408, 410 ; 508, 510 ; 608, 610) s'étendant de part et d'autre des extrémités du demi-cylindre dans un plan transverse à la direction, chacune desdites ailettes présentant une surface plane coplanaire à une surface plane de l'autre ailette, formant un même plan d'appui commun, chacune desdites ailettes présentant un perçage (209, 211 ; 309, 311 ; 409, 411 ; 509, 511 ; 609, 611), la distance entre les perçages étant égale à la distance entre les perçages de l'interface.

2. Structure en treillis selon la revendication précédente, **caractérisée en ce que** l'interface de liaison est formée de deux demi-coquilles (2a, 2b) prévues pour être assemblées l'une à l'autre, présentant chacune des faces d'appui agencées pour être en appui l'une contre l'autre lorsque les deux demi-coquilles sont assemblées.

3. Structure en treillis selon l'une quelconque des revendications précédentes, dans laquelle le deuxième point d'attache de l'interface de liaison est disposé symétriquement au premier point d'attache par rapport à la direction longitudinale.

4. Structure en treillis selon l'une quelconque des revendications précédentes, dans laquelle les axes de douilles et la direction longitudinale de l'interface de liaison sont coplanaires.

5. Structure en treillis selon l'une quelconque des revendications précédentes, dans laquelle les axes des douilles de l'interface de liaison sont concourants avec la direction longitudinale du manchon.

6. Aéronef, comportant une structure selon l'une quelconque des revendications précédentes, comportant des sous-systèmes attachés à la structure par l'interface de liaison.

7. Procédé pour fixer un équipement pourvu d'une membrure à une structure composite en treillis selon l'une quelconque des revendications 1 à 5, **caractérisé en ce qu'**on fixe des points d'attache à la membrure de l'équipement via une ou plusieurs des interfaces de liaison de la structure composite.

8. Procédé selon la revendication précédente, mis en œuvre dans un dirigeable à structure composite.

## Patentansprüche

1. Fachwerkstruktur, umfassend mindestens einen Gurt und mindestens zwei Diagonalen und mindestens eine Verbindungsschnittstelle (1), die zum Verbinden von mindestens einem Gurt (102) in Form eines zylindrischen Rohrs mit mindestens zwei Diagonalen (202, 204) vorgesehen ist, wobei die Verbindungsschnittstelle (1) umfasst:
- mindestens eine Muffe (2), die zum Umgeben des Gurts in einer Längsrichtung (X) vorgesehen ist, die Muffe umfassend:
- mindestens zwei radial vorstehende Hülsen (3, 4), wobei jede der Hülsen zum Aufnehmen eines Endes von einer der Diagonalen vorgesehen ist,
- ein erstes Verstärkungsstück (5), das sich zwischen den zwei Hülsen erstreckt, wobei das erste Verstärkungsstück eine Bohrung (51) aufweist, die einen Befestigungspunkt ausbildet,
- ein zweites Verstärkungsstück (6), das dem ersten Verstärkungsstück relativ zu der Längsrichtung gegenüberliegt, wobei das zweite Verstärkungsstück ferner mit einer zweiten Bohrung (61) versehen ist, die einen Befestigungspunkt ausbildet,
- eine Fixierung (200, 300, 400, 500, 600), die einen Halbzylinder (204, 304, 404, 504, 604) aufweist, der sich entlang einer Richtung (206, 306, 406, 506, 606) erstreckt, wobei der Innendurchmesser des Halbzylinders gleich dem Außendurchmesser der Muffe (2) der Schnittstelle (1) ist,
die Fixierung ferner umfassend zwei Flügel (208, 308; 308, 310; 408, 410; 508, 510; 608, 610), die sich auf beiden Seiten der Enden des Halbzylinders in einer zu der Richtung transversalen Ebene erstrecken, wobei jeder der Flügel eine ebene Oberfläche aufweist, die koplanar zu einer ebenen Oberfläche des anderen Flügels ist, wobei eine selbige Ebene für die gemeinsame Auflage ausbildet wird, wobei jeder der Flügel eine Bohrung (209, 211; 309, 311;409, 411; 509, 511; 609, 611) aufweist, wobei der Abstand zwischen den Bohrungen gleich dem Abstand zwischen den Bohrungen der Schnittstelle ist.

2. Fachwerkstruktur nach dem vorstehenden Anspruch,
**dadurch gekennzeichnet, dass** die Verbindungsschnittstelle aus zwei Halbschalen (2a, 2b) ausgebildet ist, die zum Zusammenbauen miteinander vorgesehen sind, wobei jede Auflageflächen aufweist, die eingerichtet sind, um aneinander anzuliegen, wenn die zwei Halbschalen zusammengebaut sind.

3. Fachwerkstruktur nach einem der vorstehenden Ansprüche, wobei der zweite Befestigungspunkt der Verbindungsschnittstelle symmetrisch zu dem ersten Befestigungspunkt relativ zu der Längsrichtung angeordnet ist.

4. Fachwerkstruktur nach einem der vorstehenden Ansprüche, wobei die Achsen der Hülsen und die Längsrichtung der Verbindungsschnittstelle koplanar sind.

5. Fachwerkstruktur nach einem der vorstehenden Ansprüche, wobei die Achsen der Hülsen der Verbindungsschnittstelle mit der Längsrichtung der Muffe zusammenlaufen.

6. Luftfahrzeug, umfassend eine Struktur nach einem der vorstehenden Ansprüche, umfassend Teilsysteme, die an der Struktur über die Verbindungsschnittstelle befestigt sind.

7. Verfahren zum Fixieren einer Ausrüstung, die mit einem Gurt versehen ist, an einer Verbund-Fachwerkstruktur nach einem der Ansprüche 1 bis 5,
**dadurch gekennzeichnet, dass** Befestigungspunkte an dem Gurt der Ausrüstung über eine oder mehrere der Verbindungsschnittstellen der Verbundstruktur befestigt werden.

8. Verfahren nach dem vorstehenden Anspruch, durchgeführt in einem Luftschiff mit Verbundstruktur.

## Claims

1. A lattice structure, comprising at least one chord and at least two diagonals, and at least one connection interface (1) intended to connect at least one chord (102), in the form of a cylindrical tube, to at least two diagonals (202, 204), said connection interface (1) comprising:
- at least one sleeve (2) intended to surround the chord in a longitudinal direction (X), said sleeve comprising:
- at least two radially projecting sockets (3, 4), each of the sockets being intended to receive one end of one of said diagonals,
- a first reinforcing part (5) extending between the two sockets, said first reinforcing part having a bore (51) forming an attachment point,
- a second reinforcing part (6) opposite the first reinforcing part with respect to the longitudinal direction, said second reinforcing part further being provided with a second bore (61) forming an attachment point,
- a fastener (200, 300, 400, 500, 600) having a half-cylinder (204, 304, 404, 504, 604) extending along a direction (206, 306, 406, 506, 606), the internal diameter of the half-cylinder being equal to the external diameter of the sleeve (2) of the interface (1),
said fastener further comprising two fins (208, 308; 308, 310; 408, 410; 508, 510; 608, 610) extending on either side of the ends of the half-cylinder in a plane transverse to the direction, each of said fins having a planar surface coplanar with a planar surface of the other fin, forming the same common bearing plane, each of said fins having a bore (209, 211; 309, 311; 409, 411; 509, 511; 609, 611), the distance between the bores being equal to the distance between the bores of the interface.

2. The lattice structure according to the preceding claim,
**characterized in that** the connection interface is formed of two half-shells (2a, 2b) intended to be assembled together, each having bearing faces arranged to bear against one another when the two half-shells are assembled.

3. The lattice structure according to any one of the preceding claims, wherein the second attachment point of the connection interface is arranged symmetrically to the first attachment point with respect to the longitudinal direction.

4. The lattice structure according to any one of the preceding claims, wherein the axes of the sockets and the longitudinal direction of the connection interface are coplanar.

5. The lattice structure according to any one of the preceding claims, wherein the axes of the sockets of the connection interface intersect with the longitudinal direction of the sleeve.

6. An aircraft, comprising a structure according to any one of the preceding claims, comprising subsystems attached to the structure by the connection interface.

7. A method for fastening a piece of equipment provided with a chord to a composite lattice structure according to any one of claims 1 to 5,
**characterized in that** attachment points are fastened to the chord of the piece of equipment via one or more of the connection interfaces of the composite structure.

8. The method according to the preceding claim, implemented in a composite-structure airship.
